(19) Europäisches Patentamt / European Patent Office / Office européen des brevets

(11) **EP 2 064 481 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(21) Anmeldenummer: **07820027.6**

(22) Anmeldetag: **04.09.2007**

(51) Int Cl.:
*F16P 3/14* (2006.01)          *B23Q 5/58* (2006.01)
*G01S 13/56* (2006.01)

(86) Internationale Anmeldenummer:
**PCT/EP2007/059215**

(87) Internationale Veröffentlichungsnummer:
**WO 2008/028899 (13.03.2008 Gazette 2008/11)**

(54) **WERKZEUGMASCHINENÜBERWACHUNGSVORRICHTUNG**

MACHINE TOOL MONITORING DEVICE

DISPOSITIF DE SURVEILLANCE DE MACHINE-OUTIL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **04.09.2006 DE 102006041760**
**03.09.2007 DE 102007041664**

(43) Veröffentlichungstag der Anmeldung:
**03.06.2009 Patentblatt 2009/23**

(73) Patentinhaber: **Robert Bosch GmbH**
**70442 Stuttgart (DE)**

(72) Erfinder: **POLLAUF, Philipp**
**71034 Boeblingen (DE)**

(56) Entgegenhaltungen:
**EP-A- 1 422 022          WO-A-94/24579**
**WO-A-2007/054529**

• **ETSI ET AL: "Object discrimination and characterization applications operating in the frequency band 2,2 GHz to 8 GHz" ETSI STANDARDS, EUROPEAN TELECOMMUNICATIONS STANDARDS INSTITUTE, SOPHIA-ANTIPO, FR, Bd. DTRERM-RM, NR 44-2, Nr. v111, Mai 2006 (2006-05), XP002459104 ISSN: 0000-0001**

**Beschreibung**

Stand der Technik

Die Erfindung geht aus von einer Werkzeugmaschinenüberwachungsvorrichtung nach dem Oberbegriff des Anspruchs 1.

Es ist bereits eine Überwachungsvorrichtung für eine Werkzeugmaschine, wie z.B. eine Tischkreissäge, bekannt, die eine Firkennungseinheit zur Erkennung einer Situation, die bei einer Anwendung der Werkzeugmaschine vorkommt, aufweist.

Aus der EP 1422 022 A1 ist ein Sicherheitssystem für ein Elektrowerkzeug, Insbesondere eine Tischkreissäge bekannt, welches im Falle einer Gefahrensituation mittels einer Aktuatorik in der Lage ist, eine Notabschaltung der Werkzeugmaschine vorzunehmen. Das System der EP 1 422 022 A1 einen oder mehrere Radarsensoren, die einen oder mehrere Sicherheitsbereiche überwachen. Wird ein Objekt im Sicherheitsbereich detektiert oder nähert sich ein Objekt mit einer erhöhten Geschwindigkeit dem Arbeitswerkzeug, so wir in eine Sicherheitsabschaltung des Elektrowerkzeuges vorgenommen, wenn Position und Annäherungsgeschwindigkeit vorgegebene Grenzwerte überschreiten.

Die gattungsbildende Unterlage der ETSI "Object discrimination and characterization applications operating in the frequency band 2,2 GHz to 8 GHz; ETSI Standards, European Telecommunications Standards Institute. Sophia Antipolis, FR; Bd DTRERM-RM, Nr 44-2; Nr. V111. Mai 2006 XP002459104 informiert über die Verwendung von Ultrabreitbandsensoren zur Detektion von Objekten und deren rechtlicher Beschränkung. Vorgestellt wird auch die Verwendung eines UWB-Sensors als Annäherungssensor für eine Werkzeugmaschinenüberwachungsvorrichtung.

Vorteile der Firfindung

Die Erfindung geht aus von einer Werkzeugmaschinenüberwachungsvorrichtung mit einer Firkennungseinheit zur Erkennung einer Anwendungssituation bei einer Werkzeugmaschine.

Die Erfindung wird durch die Merkmale des Anspruchs 1 definiert.

Es wird unter anderem vorgeschlagen, dass die einen Ultrabreitband radarsensor aufweisende Erkennungseinheit dazu vorgesehen ist, eine Arwendungssituation anhand der Detektion von menschlichem oder tierischem Gewebe zu erkennen. Hierbei kann eine besonders hohe Sicherheit bei der Anwendung der Werkzeugmaschine erreicht werden. Durch eine frühzeitige Erkennung von menschlichem oder tierischem Gewebe in einer Gefahrenzone der Werkzeugmaschine können insbesondere schwere Körperverletzungen eines Bedieners vermieden werden.

Insbesondere wird vorgeschlagen, dass die Erkennungseinheit es ermöglicht, eine Unterscheidung von menschlichem oder tierischem Gewebe einerseits und Holz oder Metall oder Kunststoffen andererseits zu treffen, wodurch eine hohe Flexibilität im Einsatz der Werkzeugmaschinenüberwachungsvorrichtung erreicht werden kann. Insbesondere kann einerseits bei der Detektion eines für ein Werkstück typischen Materials Erfassungsvorgänge eingeleitet werden, die zur Erfassung von zumindest einem Merkmal des Werkstücks, wie z.B. einer Abmessung, einer Schnitttemperatur, eines Feuchtigkeitsgrads usw. dient, und es können andererseits bei der Detektion von menschlichem Gewebe Sicherheitsmaßnahmen getroffen werden. Zur Durchführung von Sicherheitsmaßnahmen steht vorzugsweise eine Aktorikeinheit in Wirkverbindung mit der Erkennungseinheit.

In einer vorteilhaften Ausbildung der Erfindung wird vorgeschlagen, dass die Vorrichtung, insbesondere die Erkennungseinheit, eine Positions- und/oder Geschwindigkeitsbestimmung ermöglicht, wodurch eine hohe Anzahl von Anwendungssituationen erreicht werden kann. Unter einer "Positionsbestimmung" soll insbesondere die Bestimmung der Position eines mittels der Werkzeugmaschinenüberwachungsvorrichtung überwachten Objekts relativ zu einem aktiven Objekt der Werkzeugmaschine, wie insbesondere relativ zu einem Werkzeug, vorzugsweise in dessen angetriebenem Zustand, verstanden werden. Ferner soll unter einer "Geschwindigkeitsbestimmung" insbesondere die Bestimmung von zumindest einem Bewegungsmerkmal aus der Gruppe Bewegungsrichtung, momentaner Geschwindigkeitswert und momentaner Beschleunigungswert eines sich relativ zu einem aktiven Objekt der Werkzeugmaschine bewegenden Objekts verstanden werden.

In diesem Zusammenhang kann ein frühzeitiges Erkennen einer Gefahrensituation erreicht werden, wenn die Positions- und/oder Geschwindigkeitsbestimmung eine Positions- und/oder Geschwindigkeitsbestimmung von menschlichem oder tierischem Gewebe ist. Hierdurch können solche Anwendungssituationen erkannt werden, bei welchen ein menschlicher oder tierischer Körperteil sich in Richtung auf das aktive Objekt bewegt, erkannt werden, wie z.B. bei einem Abrutschen einer Hand eines Bedieners auf einem sich in Bearbeitung befindenden Werkstück.

Erfindungsgemäβ ist vorgeschlagen, dass die Erkennungseinheit der Werkzeugmaschinenüberwachungsvorrichtung einen Ultra-breitbandradarsensor aufweist. Unter einem "Ultrabreitbandradarsensor" soll in diesem Zusammenhang insbesondere ein Radarsensor verstanden werden, mittels dessen ein ultrabreitbandiges Radarsignal erzeugt, gesendet, empfangen und/oder ausgewertet werden kann. Unter einem "ultrabreitbandigen (oder Ultra Wide Band oder UWB) Radarsignal" soll insbesondere ein elektromagnetisches Signal verstanden werden, welches einen Nutzfrequenzbereich mit einer Mittenfrequenz im Frequenzbereich von 1 GHz bis 15 GHz und einer Frequenzbandbreite von zumindest 500 MHz aufweist. Es kann mit einer Nutzung von ultrabreitbandigen Radarsignalen ein besonders hohes Unterscheidungsvermögen in der Unterscheidung zwischen menschlichem bzw. tierischem Gewebe und einem Baumaterial erreicht werden, da ein derartiges Gewebe insbesondere eine hohe Dämpfungswirkung in einem Frequenzbereich oberhalb von 2 GHz besitzt.

Eine besonders effektive Erkennung kann erreicht werden, wenn die Werkzeugmaschinenüberwachungsvorrichtung, insbesondere die Erkennungseinheit, ein Antennenarray aufweist. Insbesondere kann durch den Einsatz von mehreren Antennen ein Gefahrenbereich der Werkzeugmaschine effektiv abgedeckt werden. Unter einem "Antennenarray" soll in diesem Zusammenhang insbesondere eine Gruppe von mehreren voneinander unterschiedlichen Antennen verstanden werden, die im Betrieb mittels einer gemeinsamen Signalerzeugungseinheit mit einem zu sendenden Signal gespeist werden. Zweckmäßigerweise weist das Antennenarray zumindest eine Ultrabreitbandradarantenne auf.

Es kann die Genauigkeit bei einer Erkennung erhöht werden, wenn das Antennenarray als phasenvariables Antennenarray ausgebildet ist. Unter einem "phäsenvariablen" Antennenarray soll in diesem Zusammenhang insbesondere ein Antennenarray verstanden werden, welchem zumindest ein Phasenverschiebungsmittel zugeordnet ist, welches zur Änderung zumindest einer relativen Phasenlage zwischen zwei Signalen, die von unterschiedlichen Antennen des Antennenarrays abgestrahlt werden, vorgesehen ist. Hierdurch kann insbesondere eine gewünschte Ausrichtung bzw. ein gewünschtes Fokussieren eines Überwachungssignals auf einen bestimmten Bereich einer Gefahrenzone der Werkzeugmaschine vorteilhaft erreicht werden. Beispielsweise kann ein auf ein detektiertes Objekt gerichteter Überwachungsbereich die Bewegung des Objekts verfolgen.

Ferner wird vorgeschlagen, dass die Erkennungseinheit zumindest einen Sensor aufweist, der in einer Werkzeugmaschinengrundeinbaustellung unterhalb einer Werkzeugmaschinenarbeitsfläche zum Platzieren eines Werkstücks angeordnet ist. Unter einer "Werkzeugmaschinengrundeinbaustellung" soll in diesem Zusammenhang eine Stellung verstanden werden, die bei der Anwendung der Werkzeugmaschine durch einen Endbenutzer unter vorschriftsgemäßen Anwendungsbedingungen vorliegt. Es kann hierdurch eine versteckte Anordnung des Sensors erreicht werden, wobei Hindernisse durch den Sensor und eine unerwünschte Handhabung des Sensors durch einen Bediener vorteilhaft vermieden werden können.

Vorzugweise ist die Erkennungseinheit dazu auslegt, ein durch eine Reflexion auf ein untersuchtes Objekt erzeugtes Signal auszuwerten, wodurch ein konstruktiv kompakter Aufbau der Erkennungseinheit erreicht werden kann. Die gewünschte Auslegung der Erkennungseinheit kann insbesondere durch eine auf die Erfassung des reflektierten Signals gezielte Orientierung einer Antenne erreicht werden.

Eine hohe Flexibilität in der Gestaltung von Überwachungsfunktionen kann erreicht werden, wenn die Erkennungseinheit zumindest zwei Überwachungsbereiche zum Überwachen eines Anwendungsprozesses der Werkzeugmaschine festlegt. Die Überwachungsbereiche sind vorzugsweise voneinander unterschiedlich ausgebildet. Hierbei können die Überwachungsbereiche voneinander getrennt ausgebildet sein oder sie können aneinander angrenzen oder sie können einen gemeinsamen Überlappungsbereich bilden. Insbesondere kann ein erster Überlappungsbereich einen zweiten Überwachungsbereich umfassen.

Außerdem wird vorgeschlagen, dass den Überwachungsbereichen jeweils ein unterschiedlicher Betriebsmodus der Werkzeugmaschine zugeordnet ist, wodurch eine hohe Flexibilität in der Anwendung der Werkzeugmaschine und insbesondere ein hoher Bedienkomfort erzielt werden können.

In einer bevorzugten Ausgestaltung der Erfindung wird vorgeschlagen, dass zumindest einem der Überwachungsbereiche ein Warnmodus der Werkzeugmaschine zugeordnet ist. Dadurch können vorteilhaft bei Erkennung einer potentiell gefährlichen Anwendungssituation Vorschutzmaßnahmen eingeleitet werden, bevor ein Bediener sich in einer akuten Gefahr befindet.

In diesem Zusammenhang können ein vorteilhafter Warneffekt und eine hohe Sicherheit erreicht werden, wenn die Erkennungseinheit - im Zusammenwirken mit einer Werkzeugmaschinenantriebseinheit zum Antreiben eines Werkzeugs - zum Verlangsamen eines Werkzeugantriebs im Warnmodus vorgesehen ist.

Des Weiteren wird vorgeschlagen, dass zumindest einem der Überwachungsbereiche ein Beseitigen eines angetriebenen Werkzeugs aus einem Arbeitsbereich der Werkzeugmaschine zugeordnet ist, wodurch eine potentielle Verletzungsgefahr effektiv beseitigt werden kann. Das "Beseitigen" des angetriebenen Werkzeugs, das vorzugsweise mittels einer mit der Erkennungseinheit in Wirkverbindung stehenden Aktorikeinheit durchgeführt wird, kann insbesondere durch ein Verstellen des angetriebenen Werkzeugs in eine Sicherheitsposition außerhalb des Arbeitsbereichs, wie z.B. mittels eines Versenkens des angetriebenen Werkzeugs unterhalb einer Werkzeugmaschinenarbeitsfläche, durch ein Abschalten des Antriebs des Werkzeugs und/oder durch ein Bedecken einer Schneidkante des Werkzeugs verwirklicht werden. Der "Arbeitsbereich" setzt sich vorzugsweise aus Punkten zusammen, die für einen Bediener unter vorschriftsgemäßen Anwendungsbedingungen der Werkzeugmaschine zugänglich sind.

In einer bevorzugten Ausbildung der Erfindung wird vorgeschlagen, dass zumindest einem der Überwachungsbereiche eine Sicherheitsabschaltung der Werkzeugmaschine zugeordnet ist, wodurch eine hohe Bediensicherheit der Werkzeugmaschine erreicht werden kann.

Vorteilhafterweise umfasst die Erkennungseinheit eine Recheneinheit, die dazu vorgesehen ist, die Anwendungssituation durch eine auf einer unscharfen und/oder neuronalen Logik basierende Auswertung von Kenngrößen zu erkennen. Mit Hilfe einer unscharfen Logik kann von der Recheneinheit anhand des erfassten Signals eine große und komplexe Informationsmenge schnell ausgewertet werden. Eine unscharfe Logik stellt insbesondere eine Logik dar, die dem Auftreten eines bestimmten Ereignisses einen Wahrscheinlichkeitswert im Intervall zwischen 0 (falsch) und 1 (wahr) zuordnet. Durch eine neuronale Logik können vorteilhafte Selbstlernfunktionen der Werkzeugmaschinenüberwachungsvorrichtung erreicht werden.

Erfindungsgemäß ist vorgeschlagen, dass die Erkennungseinheit eine Datenbank aufweist, in welcher einem Satz von Kenngrößen eine Anwendungssituation zugeordnet ist. Es kann ein besonders schneller Erler Erkennungsprozess einer Anwendungssituation vorteilhaft erreicht- werden, indem eine Korrelation zwischen den erfassten Kenngrößen und einer Anwendungssituation untersucht wird.

Erfindungsgemäß die Signaleinheit zur Bearbeitung eines Signals vorgesehen das in der Frequenz moduliert ist, wie insbesondere eines FMCW-Signals (Frequency Modulated Continuous Wave Oder frequenzmodulierte kontinulerliche Welle). Erfindungsgemäß ist Signaleinheit zur Erzeugung eines Signals mittels einer stufenweisen Frequenzmodulation vorgesehen. Unter einer "stufonweisen" Frequenzmodulation (oder auch "slopped frequency" qenannt) soll eine Modulation des Signals verstanden werden, bei welcher, im Gegentej. J. zu einer kontinuierlichen Änderung der Frequenz, ausgehend von einem ersten Frequenzwert bis zu einem zweiten Frequenzwert die Frequenz des Signals stufenweise geändert wird. Hierzu ist vorzugsweise zumindest ein Oszillator vorgesehen, bei welchem die Ausgangsfrequenz steuorbar ist. Der erste Frequenzwert und der zweite Frequenzwert spannen einen ultrabreitbandigen Frequenzbereich.

Ferner weist die Werkzeugsmaschinenüberwachungsvorrichtung bevorzugterweise eine Aktorikeinheit zur Durchführung einer Sicherheitsmaßnahme auf, die mit der Erkennungseinheit in Wirkverbindung steht. Diese Aktorikeinheit ist insbesondere dazu vorgesehen, anhand eines Signals der Signaleinheit das Vorhandensein eines zu einer Bewegung angetriebenen Werkzeugs in einer Gefahrenzone zu beseitigen. Hierbei kann unter dem "Beseitigen" ein Abschalten des Werkzeugantriebs oder das Verstellen des angetriebenen Werkzeugs aus der Gefahrenzone verstanden werden. Die "Gefahrenzone" setzt sich vorzugsweise aus Punkten zusammen, die einen kleinsten Abstand zum angetriebenen Werkzeug von maximal 5 cm, insbesondere maximal 2 cm aufweisen.

Ferner wird ein Verfahren gemäß Anspruch 19 zur Erkennung einer Anwendungssituation bei einem Anwendungrsprozess einer Werkzeugmaschine vorgeschlagen, bei welchem zur Erkennung der Anwendungssituation wenigstens eine Kenngröße aus der Detektion von menschlichem oder tierischem Gewebe erfasst wird, wodurch eine hohe Sicherheit bei der Anwendung der Werkzeugmaschine erreicht werden kann.

Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine Tischkreissäge in einer Seitenansicht mit einer Erkennungseinheit,

Fig. 2 eine interne Schaltung der Firkennungseinheit,

Fig. 3 ein von der Erkennungseinheit gesendetes ultrabreitbandiges Sendesignal in einer spektralen Darstellung,

Fig. 5 die Frequenz des Sendesignals als Funktion der Zeit bei einer Erzeugung mittels einer stufenweisen Freuquenzmodulation,

Fig. 6 eine Firzeugungseinheit, eine Aufbereitungseinheit und eine Auswerteeinheit der Firkennungseinheit,

Fig. 7a bis 7c die Erkennung eines Werkstücks und einer Hand durch eine reflexive Messung von unten,

Fig. 8a bis 8c die Erkennung eines Werkstücks und einer Hand durch eine reflexive Messung von oben,

Fig. 9a bis 9c die Erkennung einen Werkstücks und einer Hand bei einer transmissiven Messung,

Fig. 10 die Tischkreissäge in einer Ansicht von oben mit einer Ausführung der Erkennungseinheit mit Antennenarrays,

Fig. 11 die Detektion einer Hand in einem werkzeugfernen Überwachungsbereich mit dem Auslösen eines Warnmodus,

Fig. 12 die Detektion einer Hand in einem werkzeugnahen Überwachungsbereich mit dem Auslösen eines Aktorikmodus,

Fig. 13 eine weitere Ausführung von durch die Antennenarrays festgelegten Überwachungsbereichen und

Fig. 14 eine Datenbank der Erkennungseinheit.

Beschreibung der Ausführungsbeispiele

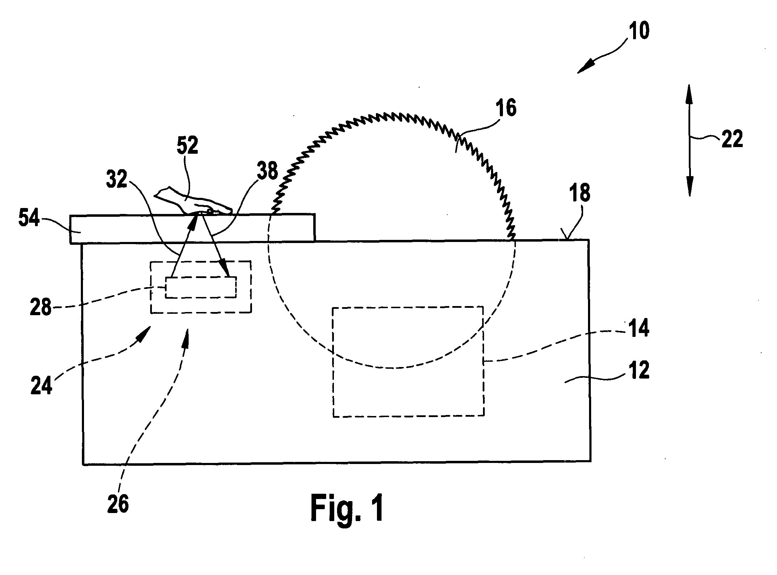

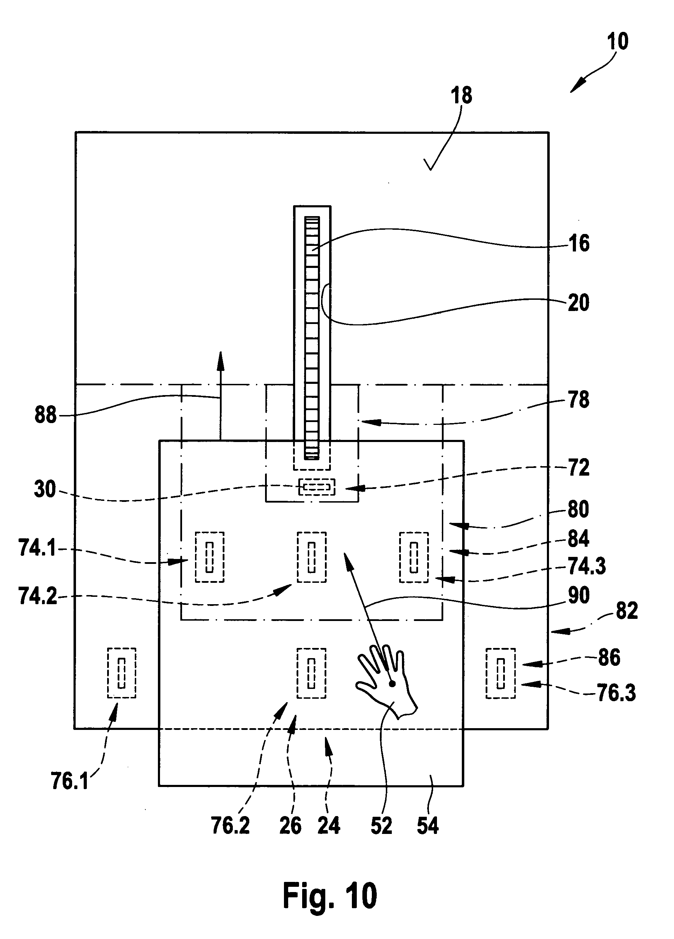

Figur 1 zeigt eine als stationäre Kreissäge ausgebildete Werkzeugmaschine 10. Diese weist ein Gehäuse 12 auf, in welchem eine als Elektromotor ausgebildete Antriebseinheit 14 zum Antreiben eines Werkzeugs 16, das als ein kreisförmiges Sägeblatt ausgebildet ist, angeordnet ist. Die Werkzeugmaschine 10 umfasst ferner eine Werkzeugmaschinenarbeitsfläche 18, die von einem Sägetisch gebildet ist und die in der gezeigten Grundeinbaustellung der Werkzeugmaschine 10 horizontal ausgerichtet ist und zum Platzieren, insbesondere zum Auflegen eines Werkstücks, vorgesehen ist. Das Werkzeug 16 ragt aus der Werkzeugmaschinenarbeitsfläche 18 durch einen in Figur 10 zu sehenden Spalt 20 in vertikaler Richtung 22 nach oben heraus.

Die Werkzeugmaschine 10 ist mit einer Werkzeugmaschinenüberwachungsvorrichtung 24 versehen. Diese weist eine Erkennungseinheit 26 auf, die zur Erkennung einer bei einer Anwendung der Werkzeugmaschine 10 vorkommenden Anwendungssituation vorgesehen ist. Die Erkennungseinheit 26 ist dazu vorgesehen, eine Anwendungssituation anhand der Detektion von menschlichem oder tierischem Gewebe zu erkennen. Hierzu weist die Erkennungseinheit 26 einen Ultrabreitbandradarsensor 28 auf. Die Erkennungseinheit 26 und insbesondere der Ultrabreitbandradarsensor 28 sind in der gezeigten Grundeinbaustellung der Werkzeugmaschine 10 unterhalb der Werkzeugmaschinenarbeitsfläche 18 angeordnet. Hierbei ist der Ultrabreitbandradarsensor 28 innerhalb des Gehäuses 12, welches vorzugsweise als Kunststoffgehäuse ausgebildet ist, für einen Endbediener unsichtbar angeordnet. Durch diese versteckte Anordnung können unerwünschte Manipulationen des Endbedieners vorteilhaft vermieden werden.

Hier und im gesamten Text beziehen sich die Begriffe "oben, unten, oberhalb, unterhalb" usw. auf die in Figur 1 gezeigte Grundeinbaustellung der Werkzeugmaschine 10.

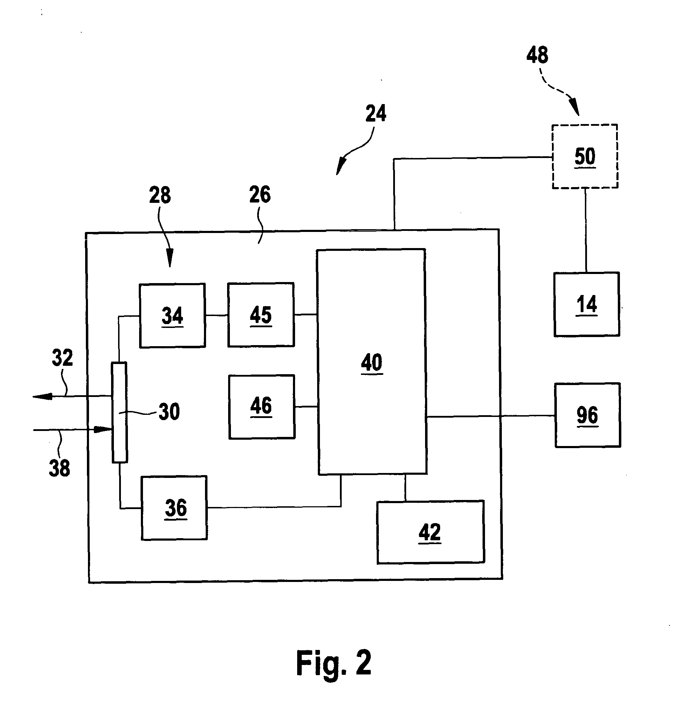

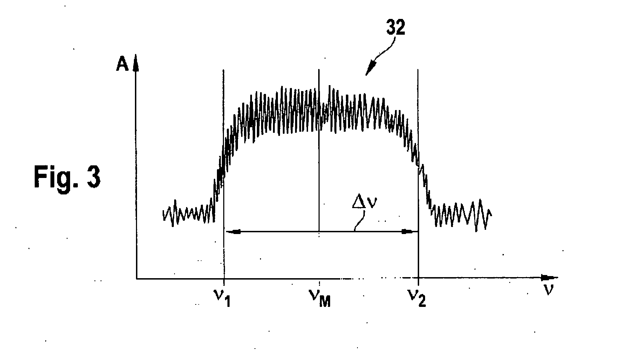

Der Aufbau und das Zusammenwirken der Erkennungseinheit 26 mit weiteren Einheiten der Werkzeugmaschine 10 sind anhand der Figur 2 näher erläutert. Die Erkennungseinheit 26 weist den Ultrabreitbandradarsensor 28 auf. Dieser umfasst eine als Ultrabreitbandradarantenne ausgebildete Antenne 30 auf, an welcher im Betrieb ein in Figur 3 gezeigtes Ultrabreitbandradarsignal 32 angelegt ist. Dieses Signal wird mittels einer Signalerzeugungseinheit 34 erzeugt, die für einen ultrabreitbandigen Betrieb vorgesehen ist.

In Figur 3 ist das Spektrum des Ultrabreitbandradarsignals 32 dargestellt, wobei die Amplitude A auf der Y-Achse und eine Frequenz $\nu$ auf der X-Achse aufgetragen sind. Das Ultrabreitbandradarsignal 32 wird mit einer Mittenfrequenz $\nu_M$ vor 5 GHz und einer Signalbandbreite $\Delta\nu$ von 2 GHz um diese Mittenfrequenz $\nu_M$ übertragen. Dabei beträgt eine Unterfrequerz $\nu_1$ - 4 GHz, und eine Oberfrequenz $\nu_2$ - 6 GHz. Ein von dem Ultrabreitbandradarsignal 32 angeregtes Empfangssignal 38, wie z.B. durch eine Reflexion oder eine Transmission des Ultrabreitbandradarsignals 32 durch bzw. auf ei n untersuchtes Medium, wird zur Auswertung einer Kreuzkorrelation mit dem Ultrabreitbandradarsignal, 32 in dessen gesendeter Form unterzegen. Dies kann über einen Filter erfolgen, dessen Impulsantwort der Zeizinversen des omittierten Ultrabreitbandradarsignals 32 entspricht oder mit Hilfe eines Sliding Correlation Technik, bei welcher das Emplangssignal 38 mit einer Kopie des emittjerten Signals multipliziert und anschließend integriert wird.

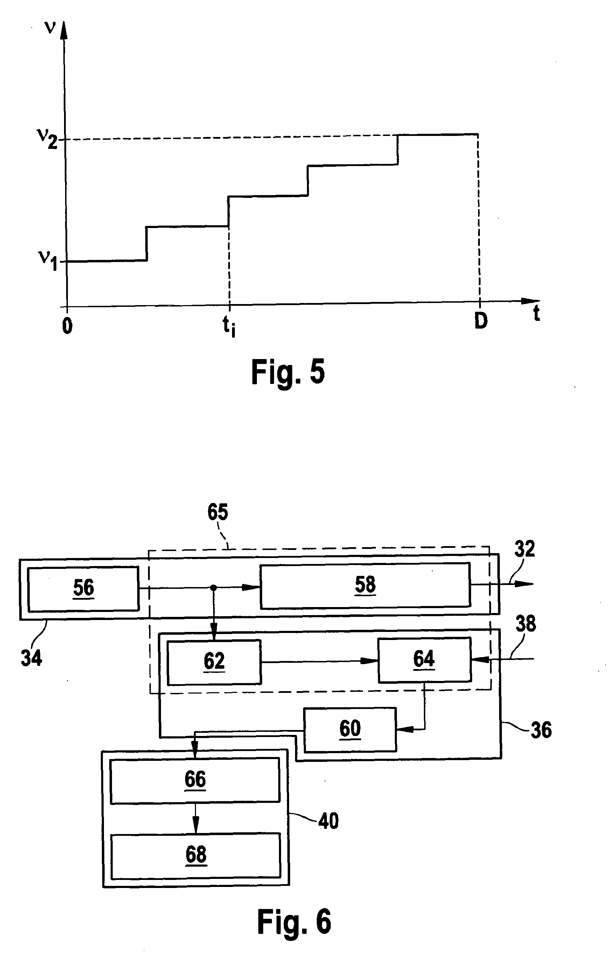

Figur 5 stellt eine alternative Herstellung des von der Signalerzeugungseinheit 34 erzeugten Ultrabreitbandradarsignals 32. Die Signalerzeugungseinheit 34 ist in dieser weiteren ausführung zur Erzeugung des Ultrabreitbandradarsignals 32 mittels einer stufenweisen Frequenzmodulation vorgesehen. Das in Figur 5 gezeigte Diagramm stellt die Frequenz V des Ultrabreitbandradarsignals 32 als Funktion der Zeit t während einer Zeitsequenz von Dauer D. Während der gezeigten Sequenz, welche wiederholt wird, wird die Frequenz $\nu$ über den ultrabreitbandigen Frequenzbereich, der durch die Unterfrequenz $\nu_1$ und die Oberfrequenz $\nu_2$ gespannt ist, stufenweise geändert, insbesondere stufenweise erhöht, indem die Frequenz $\nu$ zu diskreten Zeitpunkten $t_i$ inkrementiert wird. Dies erfolgt mittels eines nicht näher dargestellten steuerbaren Oszillators, dessen Ausgangsfrequenz inkrementiert wird.

Die Erkennungseinheit 26 weist ferner eine Signalaufbereitungseinheit 36 auf, die nach einem Empfangen des vom Ultrabreitbandradarsignal 32 angeregten Empfangssignals 38 (siehe Figur 1) durch die Antenne 30 zum Filtern, Verstärken und/oder Digitalisieren des Empfangssignals 38 vorgesehen ist, bevor dieses auf eine Recheneinheit 40 zur Verarbeitung bzw. zur Auswertung gegeben wird. Die Recheneinheit 40, die Bestandteil der Erkennungseinheit 26 ist, weist zumindest einen Mikroprozessor auf (siehe Figur 6) oder sie kann als Mikroprozessor ausgebildet sein. Die Recheneinheit 40 steht mit einer Speichereinheit 42 in Wirkverbindung, in welcher z.B. eine Software zur Durchführung von Auswerteaufgaben gespeichert ist. In der Speichereinheit 42 ist eine Datenbank 44 gespeichert, deren Funktion. weiter unten näher beschrieben wird. Die Struktur der Signalerzeugungseinheit 34, der Signalaufbereitungseinheit 36 und der Recheneinheit 40 wird anhand der Figur 6 näher beschrieben.

Optional kann, wie in Figur 2 gezeigt, die Erkennungseinheit 26 mit einem Mittel 45 versehen sein, das in einem Energiesparmodus ein Tastverhältnis für das gesendete Ultrabreitbandradarsignal 32 festlegt. Dieses Tastverhältnis ist ein Verhältnis zwischen einer ersten Zeitdauer, in welcher das Ultrabreitbandradarsignal 32 gesendet wird, und einer zweiten Zeitdauer, in welcher ein Senden des Ultrabreitbandradarsignals 32 eingestellt wird. Ferner kann die Erkennungseinheit 26 optional mit einer weiteren Einheit 46 versehen werden, die zur Durchführung einer "Listen-Before-Talk" Funktion vorgesehen ist. Vor einem Starten eines Antriebs des Werkzeugs 16 und eines Überwachungsbetriebs der Erkennungseinheit 26 wird mittels der Einheit 46 der Nutzfrequenzbereich des Ultrabreitbandradarsensors 28 auf weitere Dienste, wie z.B. einen GSM- oder UMTS-Dienst, abgesucht. Wird ein derartiger Fremddienst erkannt, so können Maßnahmen getroffen werden, die zum Schützen des Fremddiensts bzw. der Erkennungseinheit 26 vorgesehen sind.

Die Werkzeugmaschinenüberwachungsvorrichtung 24 weist ferner eine Aktorikeinheit 48 auf, die in Wirkverbindung mit der Erkennungseinheit 26 steht. Diese Aktorikeinheit 48 ist im betrachteten Beispiel von einer Steuereinheit 50 gebildet, die zur Steuerung eines Betriebs der Antriebseinheit 14 dient. Durch die Erkennung einer Anwendungssituation, in welcher eine bestehende Gefahr erkannt wird, wird von der Erkennungseinheit 26 ein Signal an die Aktorikeinheit 48 übertragen, die anhand von diesem ein Sicherheitsabschalten des Betriebs der Werkzeugmaschine 10 betätigt. Es sind weitere Ausführungen der Aktorikeinheit 48 denkbar. Beispielsweise kann die Aktorikeinheit 48 zum Antreiben von Sicherheitsmitteln vorgesehen sein, die zu einem Bremsen, einem Bedecken und/oder zu einem Entfernen des Werkzeugs 16 aus einer Gefahrenzone, wie z.B. durch ein Versenken in das Gehäuse 12, dienen.

Wie der Figur 1 zu entnehmen ist, ist der Ultrabreitbandradarsensor 28 bzw. die Antenne 30 derart ausgelegt, dass er zusätzlich zum Senden des Ultrabreitbandradarsignals 32 das durch das Ultrabreitbandradarsignal 32 bei einer Reflexion auf ein untersuchtes Objekt 52 angeregte Empfangssignal 38 erfassen kann. In der in Figur 1 gezeigten Anwendungssituation ist das untersuchte Objekt 52 die Hand eines Bedieners, die auf einem sich in Bearbeitung befindenden Werkstück 54 aus Holz aufgestellt ist.

Figur 6 zeigt die Signalerzeugungseinheit 34, die Signalaufbereitungseinheit 36 und die Recheneinheit 40 der Erkennungseinheit 26 in einer Detailansicht. Die Signalerzeugungseinheit 34 weist eine Einheit 56 auf, die als Takterzeuger ausgebildet ist. Beispielsweise erzeugt die Einheit 56 einen Systemtakt von 8 GHz. In einer nicht erfindungsgemäßen Ausführung der Signalerzeugungseinheit 34 zur Erzeugung eines Pseudo Noise Signals weist diese eine weitere Einheit 58 auf, die als multistufiges, rückgekoppeltes Schieberegister zur Erzeugung einer Pseudo Noise Folge vorgesehen ist. Insbesondere ist die Einheit 58 als 9-stufiges Schieberegister ausgebildet. Die Signalaufbereitungseinheit 36, die das analoge Empfangssignal 38 in ein digitales Auswertesignal umwandelt, umfasst zum Digitalisieren des Empfangssignals 38 einen A/D-Wandler 60, welchem ein multistufiger Binärteiler 62, und zwar insbesondere ein 9-stufiger Binärteiler, und eine Abtast-Halte-Schaltung 64 vorgeschaltet sind. Die Einheit 58, der Binärteiler 62 und die Abtast-Halte-Schaltung 64 bilden vorzugsweise einen integrierten HF-Schaltkreis 65. Die Recheneinheit 40 weist eine Einheit 66, die als "Fast Arithmetic Processor" zur Mittelung des Auswertesignals, insbesondere über 256 Werte, ausgebildet ist, und einen als digitaler Signalprozessor (oder DSP) ausgebildeten Prozessor 68 auf, mittels dessen beispielsweise die oben beschriebene Kreuzkorrelation des Auswertesignals mit dem Ultrabreitbandradarsignal 32 zur Ermittlung einer Impulsantwort durchgeführt wird.

Es ist hierbei zu beachten, dass ein großer Teil der Energie am Antennenfußpunkt ggf. reflektiert werden kann. Diese Reflexion ist sehr stark und es muss ein Referenzwertabzug erfolgen, d.h. ein Datensatz, der ohne Messobjekt aufgezeichnet wurde und nur die Reflexion am Antennenfußpunkt beinhaltet, wird von den anderen Datensätzen subtrahiert. Andernfalls sind die deutlich schwächeren Reflexionen an den Messobjekten kaum zu erkennen.

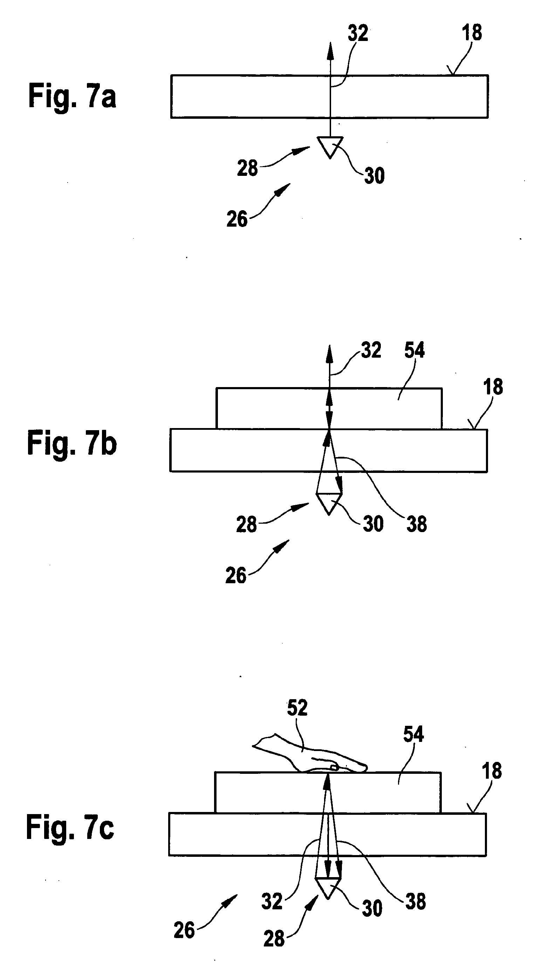

Das Empfangssignal 38 kann von der Recheneinheit 40 im Zeitbereich und/oder im Frequenzbereich ausgewertet werden. Zunächst wird eine Auswertung im Zeitbereich beschrieben. Der Erkennungsvorgang wird anhand der Figuren 7a bis 7c beschrieben. Bei einer reflektiven Messung von unten tritt ohne Medium, d.h. ohne aufgelegtes Werkstück 54 keine bzw. nur eine leichte Reflexion an einer an den Sägetisch angebrachten Plastikabdeckung auf. Diese wird durch den Referenzwertabzug eliminiert. Legt man das Werkstück 54 aus Holz über den Ultrabreitbandradarsensor 28, findet eine leichte Reflexion am Werkstück 54 statt, wobei das Ultrabreitbandradarsignal 32 im Wesentlichen durch das Werkstück 54 transmittiert wird. Wird die Hand auf das Werkstück 54 aufgelegt, so kommt es zu einer deutlich stärkeren Reflexion an der Grenzschicht zwischen Holz und Hand und dadurch zu einer deutlichen Steigerung der Amplitude des Empfangssignals 38, was von der Erkennungseinheit 26 registriert wird.

Bei dieser Messung kann bei bekannter Holzstärke s/2 auf die Ausbreitungsgeschwindigkeit und die Dielektrizitätszahl $\varepsilon_r$ im Holz geschlossen werden. Dabei gilt

$$\Delta t = \frac{s}{c_2} = \frac{s\sqrt{\varepsilon_r}}{c_0}$$

wobei s die doppelte Holzdicke und $c_0$ die Lichtgeschwindigkeit in der Luft ist. Die Verzögerung $\Delta t$ ist die Differenz zwischen der Laufzeit zwischen Senden des Ultrabreitbandradarsignals 32 und Empfangen des Empfangssignals 38 bei Reflexion des Ultrabreitbandradarsignals 32 an der Unterseite des Werkstücks 54 einerseits und der Laufzeit zwischen Senden des Ultrabreitbandradarsignals 32 und Empfangen des Empfangssignals 38 bei Reflexion des Ultrabreitbandradarsignals 32 an der Hand andererseits. Versuche haben gezeigt, dass die Erkennung der Hand anhand der Steigerung der Amplitude des Empfangssignals 38 bei stark unterschiedlichen Feuchtigkeitsgraden des Werkstücks 54 mit einer gleich hohen Zuverlässigkeit erfolgen kann.

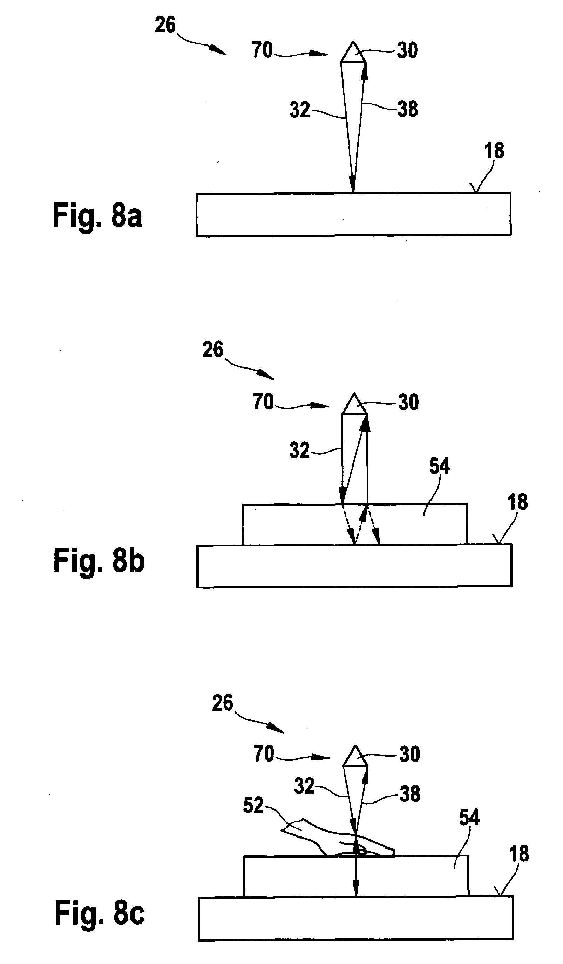

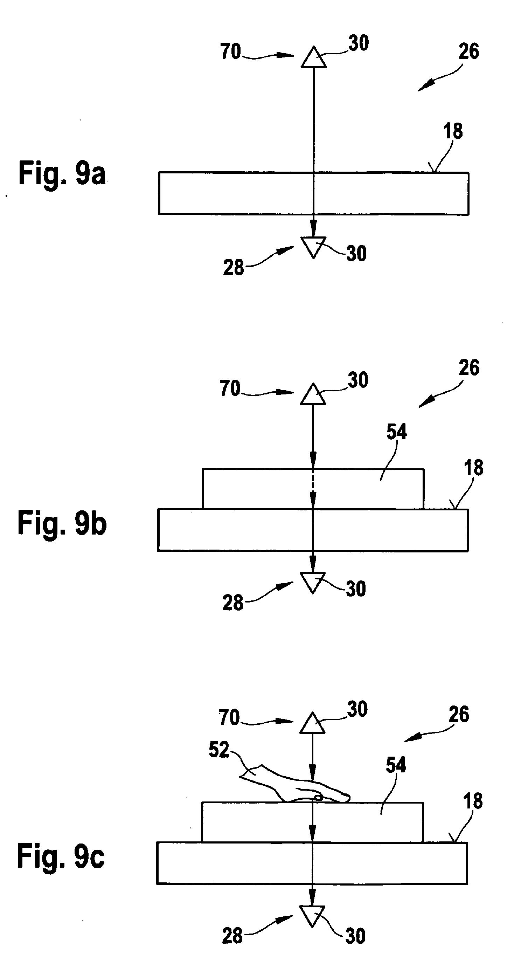

Die Figuren 8a bis 8c und 9a bis 9c betreffen Ausführungsvarianten der Erkennungseinheit 26, in welcher ein Ultrabreitbandradarsensor 70 in der Grundeinbaustellung der Werkzeugmaschine 10 oberhalb der Werkzeugmaschinenarbeitsfläche 18 angeordnet ist. Beispielsweise kann der Ultrabreitbandradarsensor 70 in einer Schutzhaube (nicht gezeigt) angeordnet sein. Um eine vorteilhafte Kabelführung zu erzielen kann diese an einer Schutzhaube angebracht sein, die über einen Schwenkarm seitlich des Werkzeugs 16 montiert ist.

In der Ausführung aus den Figuren 8a bis 8c ist der Ultrabreitbandradarsensor 70, wie für den Ultrabreitbandsensor 28, mit einer Antenne 30 als Sender und Empfänger ausgebildet, wobei auf eine Anordnung eines Sensors unterhalb der Werkzeugmaschinenarbeitsfläche 18 verzichtet wird. Bei einer reflexiven Messung von oben besteht eine geringere Sendeleistung als bei der oben beschriebenen Konfiguration, da das untersuchte Objekt 52 von keinem anderen dämpfenden Material verdeckt wird. Bei einer reflexiven Messung von oben tritt zunächst eine Totalreflexion am metallischen Sägetisch auf. Wird das Werkstück 54 aus Holz unter den Ultrabreitbandradarsensor 70 geschoben, wird die Reflexion am Sägetisch auf dem Hin- und Rückweg durch das Holz etwas stärker gedämpft als in der Luft. Außerdem wird durch die geringere Ausbreitungsgeschwindigkeit im Werkstück 54 die Reflexion zeitlich nach hinten verschoben, was von der Erkennungseinheit 26 registriert wird. Bei bekannter Holzstärke kann über diese Verzögerung auf die Ausbreitungsgeschwindigkeit im Holz und damit auf die Permittivität $\varepsilon_r$ geschlossen werden.

$$\Delta t = \frac{s}{c_2} - \frac{s}{c_0} = s\left(\frac{\sqrt{\varepsilon_r}}{c_0} - \frac{1}{c_0}\right) = \frac{s}{c_0}\left(\sqrt{\varepsilon_r} - 1\right)$$

Die Verzögerung $\Delta t$ ist der Zeitunterschied in der Laufzeit zwischen Senden des Ultrabreitbandradarsignals 32 und Empfangen des Empfangssignals 38 ohne aufgelegtes Medium einerseits und bei aufgelegtem Werkstück 54 andererseits. Gelangt die Hand unter den Ultrabreitbandradarsensor 70, kommt es zu deutlich früheren Reflexionen aufgrund der geringeren Distanz zwischen Hand und Ultrabreitbandradarsensor 70. Dieses deutliche Abfallen der Laufzeit wird durch die Erkennungseinheit 26 registriert. Die Reflexion des Sägetisches geht wegen dem großen Energieanteil, der bereits an der Grenzschicht Luft - Hand reflektiert wurde, und der Absorption der Hand stark zurück. Die Verzögerung $\Delta t$ zwischen der Reflexion ohne Medium und der Reflexion mit der Hand auf dem Holz beträgt ca.

$$\Delta t = 2 \cdot \frac{Holzdicke + Handdicke}{c_0}$$

Die Figuren 9a bis 9c zeigen den Erfassungsvorgang in einer weiteren Ausführung der Erkennungseinheit 26, bei welcher zusätzlich zum Ultrabreitbandradarsensor 28 unterhalb der Werkzeugmaschinenarbeitsfläche 18 den Ultrabreitbandradarsensor 70 oberhalb der Werkzeugmaschinenarbeitsfläche 18 angeordnet ist. Der obere Ultrabreitbandradarsensor 70 ist als Sender ausgebildet, während der untere Ultrabreitbandradarsensor 28 als Empfänger ausgebildet ist. Die umgekehrte Konfiguration ist denkbar. Es ist eine weitere Konfiguration möglich, in welcher beide Antennen 30 beiderseits der Werkzeugmaschinenarbeitsfläche 18 als Sender und Empfänger ausgebildet sind. Eine solche Konfiguration hat den größten Informationsgehalt, da sowohl der transmittierte als auch der reflektierte Signalanteil erfassbar ist. Ferner kann mittels einer Erfassung durch eine Reflexion des Ultrabreitbandradarsignals 32 von oben ein Erkennungsvorgang bei einem metallischen Werkstück 54 erfolgen.

Es erfolgt die Erkennung des Vorhandenseins der Hand mittels einer Auswertung des durch die untersuchten Objekte transmittierten Ultrabreitbandradarsignals 32. Bei der transmittiven Messweise muss nicht unbedingt ein Referenzabzug erfolgen, da hier die starken Reflexionen am Antennenfußpunkt nicht aufgezeichnet werden. Bei dieser Messung sorgen vor allem die Dämpfungseigenschaften der Materialien für Unterschiede in der Messung, aber auch unterschiedliche Ausbreitungsgeschwindigkeiten werden detektiert. Bei der Transmission des Ultrabreitbandradarsignals 32 gehen die TEM-Wellen nahezu ungedämpft mit leicht reduzierter Ausbreitungsgeschwindigkeit durch das Werkstück 54 hindurch, während die Hand hingegen die Wellen sehr stark dämpft. Die Ausbreitungsgeschwindigkeit im Werkstück 54 und Dielektrizitätszahl lassen sich, wie oben dargelegt, berechnen. Das Eintreten der Hand in den von der Erkennungseinheit 26 überwachten Bereich kennzeichnet sich durch einen Abfall der Amplitude des Empfangssignals 38, was durch die Erkennungseinheit 26 registriert wird.

Bei einer Auswertung im Frequenzbereich wird das Frequenzspektrum des Empfangssignals 38 ausgewertet. Dies wird auf bekannte Weise mittels einer Fouriertransformation durchgeführt. In der Ausführung aus den Figuren 7a bis 7c wird das Frequenzspektrum insbesondere im Frequenzintervall zwischen 2 GHz und 4 GHz analysiert. Dies entspricht dem Bereich, in dem die größte Energie abgestrahlt wird. Beim Auflegen der Hand auf das Werkstück 54 nehmen die Frequenzanteile zwischen 2,5 GHz und 3 GHz deutlich zu, was von der Erkennungseinheit 26 registriert wird. In der Ausführung aus den Figuren 8a bis 8c kann die Erkennungseinheit 26 im reflektierten Spektrum zwischen Holz einerseits und dem Gewebe der Hand andererseits unterscheiden, indem ein Zunehmen der Amplitude von Frequenzanteilen in einem bestimmten Frequenzbereich erfasst wird. Bei dem Erkennungsvorgang aus den Figuren 9a bis 9c kann die Erkennungseinheit 26 das Vorhandensein der Hand im überwachten Bereich durch ein Senken der Amplitude von Frequenzanteilen in einem bestimmten Frequenzbereich erkennen, da diese Frequenzanteile im menschlichen Gewebe deutlich mehr gedämpft sind als im Werkstück 54 aus Holz. Typischerweise ist die durch menschliches Gewebe verursachte Dämpfung um einen Faktor 10 höher als die Dämpfung im Holz.

In einer alternativen Ausführungsvariante ist denkbar, dass die Erkennungseinheit 26 eine Leistungseinheit aufweist, die zur Steuerung der mittels des Ultrabreitbandradarsignals 32 abgestrahlten Leistung in Abhängigkeit einer aufgrund eines Mediums erfolgenden Dämpfung des Ultrabreitbandradarsignals 32 vorgesehen ist. Ist ein dämpfendes Medium, wie z.B. das Werkstück 54 aus Holz auf die Werkzeugmaschinenarbeitsfläche 18 aufgelegt, kann typischerweise eine Dämpfung frequenzabhängig zwischen 1dB und zumindest 3dB verursacht werden. Ist dies erkannt, kann durch die Leistungseinheit die Sendeleistung erhöht werden, was sich positiv auf die Signalqualität auswirkt.

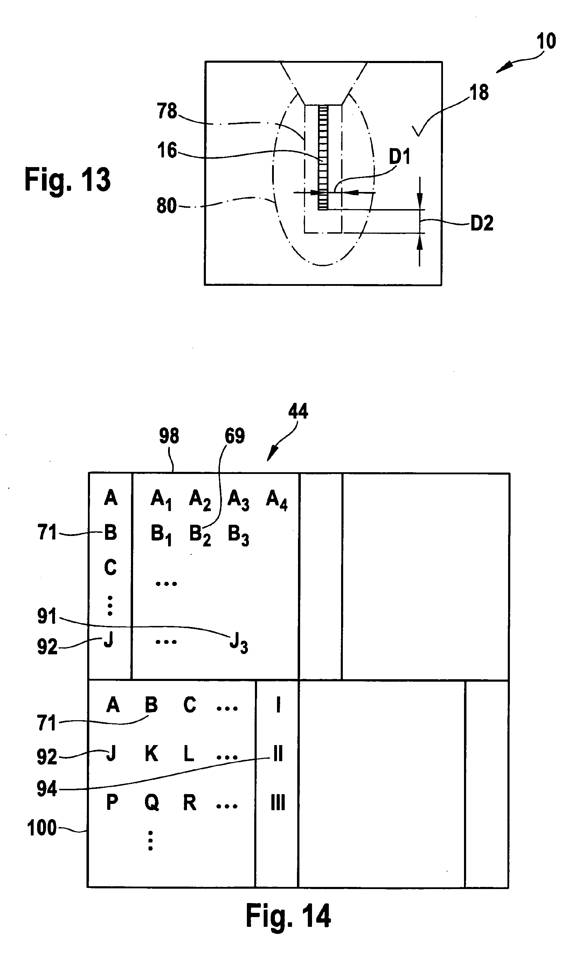

Durch ein Zusammenwirken der Erkennungseinheit 26 und der Aktorikeinheit 48 können anhand einer Anwendungssituation Sicherheitsmaßnahmen getroffen werden. Es wird z.B. angenommen, dass das Vorhandensein der Hand des Bedieners in einer Gefahrenzone der Werkzeugmaschine 10 in der Konfiguration aus den Figuren 7a bis 7c erkannt wird. Hierzu kann die Antenne 30 auf die Überwachung der Gefahrenzone gerichtet sein. Hierbei wird z.B., wie oben beschrieben, von der Erkennungseinheit 26 registriert, dass die Amplitude des Empfangssignals 38 eine voreingestellte Schwelle 69 überschreitet, während die Hand in der Gefahrenzone lokalisiert ist. Diese Schwelle 69 ist in der Datenbank 44 (siehe Figur 14) gespeichert, während das Überschreiten als Anwendungssituation 71 in dieser Datenbank 44 bezeichnet ist. Liegt dieses Überschreiten vor, so überträgt die Erkennungseinheit 26 ein Erkennungssignal an die Aktorikeinheit 48 zur Durchführung einer Sicherheitsmaßnahme. Dies ist weiter unten beschrieben.

Zusammenfassend kann, wie oben beschrieben, anhand einer zeitlichen und/oder spektralen Auswertung des Empfangssignals 38 eine Unterscheidung zwischen menschlichem Gewebe einerseits und einem Werkstück aus Holz andererseits durch die Erkennungseinheit 26 auf Grund der Veränderung der relativen Permittivität in dem von der Erkennungseinheit 26 überwachten Bereich und der Veränderung von Laufzeiten zwischen Senden des Ultrabreitbandradarsignals 32 und Empfangen des Empfangssignals 38 getroffen werden. Dies ist für weitere Materialarten eines Werkstücks denkbar, wie insbesondere für Kunststoffe und, insbesondere bei einer reflexiven Messung von oben, für Metalle.

Die oben beschriebenen Erkennungsvorgänge können durch den Einsatz einer einzelnen Antenne 30, die als Sender und Empfänger ausgebildet ist, realisiert werden. Werden mehrere Antennen 30 eingesetzt, kann zusätzlich eine Position- und/oder Geschwindigkeitsbestimmung eines überwachten Objekts durchgeführt werden. In Figur 10 ist die Werkzeugmaschine 10 in einer Ansicht von oben dargestellt, in welcher eine alternative Ausführung der Erkennungseinheit 26 dargestellt ist. Die Erkennungseinheit 26 ist mit einer Mehrzahl von Ultrabreitbandradarsensoren 72, 74.1 bis 74.3 und 76.1 bis 76.3 versehen, die unterhalb der Werkzeugmaschinenarbeitsfläche 18 angeordnet sind. Sie weisen jeweils eine Antenne 30 auf, die zur Abstrahlung bzw. zum Empfangen eines Ultrabreitbandradarsignals 32 vorgesehen ist. Die Erkennungseinheit 26 mit der Anordnung der Ultrabreitbandradarsensoren 72, 74, 76 legt drei verschiedene Überwachungsbereiche 78, 80, 82 zum Überwachen eines Anwendungsprozesses der Werkzeugmaschine 10 fest. Der erste, werkzeugnahe Überwachungsbereich 78 entspricht einem Werkzeugbereich, auch "Gefahrenzone" genannt, der sich in unmittelbarer Nähe des Werkzeugs 16 erstreckt und hierbei an die Außenkontur des Werkzeugs 16 angrenzt. Insbesondere setzt sich der erste Überwachungsbereich 78 aus Punkten zusammen, die einen kleinsten Abstand zum Werkzeug 16 von maximal 2 cm aufweisen. Der erste Überwachungsbereich 78 ist mittels des Ultrabreitbandradarsensors 72 festgelegt. Dem Überwachungsbereich 80, der an den Überwachungsbereich 78 angrenzt, sind drei Ultrabreitbandradarsensoren 74.1 bis 74.3 zugeordnet, wobei die entsprechenden Antennen 30 in einem ersten Antennenarray 84 ausgelegt sind. Dem Überwachungsbereich 82 sind drei Ultrabreitbandradarsensoren 76.1 bis 76.3 zugeordnet, wobei die entsprechenden Antennen 30 einem zweiten Antennenarray 86 ausgelegt sind. Im betrachteten Fall sind die Antennenarrays 84, 86 als phasenvariable Antennenarrays ausgebildet. Hierbei können innerhalb eines Antennenarrays 84, 86 relative Phasenlagen zwischen Sendesignalen, die von den einzelnen, das entsprechende Antennenarray 84, 86 bildenden Antennen 30 erzeugt werden, gesteuert werden. Es kann hierbei mittels konstruktiver und/oder destruktiver Interferenzen ein Sendesignal zur Strahlung in einer bevorzugten Senderichtung gebündelt werden. Die Steuerung der relativen Phasenlagen erfolgt mittels nicht näher dargestellter Phasenverschiebeelemente.

Das Eindringen des Werkstücks 54 in den Überwachungsbereich 82, z.B. durch dessen Schieben in einer Werkstückschieberichtung 88, wird von der Erkennungseinheit 26, wie anhand der Figuren 7a bis 7c oben beschrieben, im Zeitbereich durch die Beobachtung einer Laufzeit oder im Frequenzspektrum durch die Beobachtung der Amplitude in einem bestimmten Bereich des Frequenzspektrums erkannt. Wird nun die Hand des Bedieners im Überwachungsbereich 82 erfasst, so werden Erfassungsvorgänge eingeleitet, die zur Vermeidung eines Kontakts der Hand mit dem rotierenden Werkzeug 16 dienen. Wird im werkzeugfernen Überwachungsbereich 82 eine schnelle Geschwindigkeitszunahme oder eine hohe Momentangeschwindigkeit der Hand zum rotierenden Werkzeug 16 detektiert, so dass selbst bei einer möglichen anschließenden Geschwindigkeitsabnahme der Kontakt mit dem Werkzeug 16 unvermeidbar ist, dann kann bereits in dieser Zone z.B. eine Abschaltung der Antriebseinheit 14, ein Versenken und/oder ein Bedecken des Werkzeugs 16 mittels der Aktorikeinheit 48 erfolgen. Die Erkennungseinheit 26 erfasst die Position der Hand im Überwachungsbereich 82. Ferner führt die Erkennungseinheit 26 eine Geschwindigkeitsbestimmung aus, indem Bewegungsmerkmale, welche die Bewegung der Hand relativ zum rotierenden Werkzeug 16 charakterisieren, erfasst werden. Durch die Erfassung der Position der Hand relativ zum Werkzeug 16 zu verschiedenen Zeitpunkten werden hierbei eine Bewegungsrichtung 90, der momentane Wert der Geschwindigkeit sowie der Beschleunigung der Hand mittels der Recheneinheit 40 ermittelt. Die Geschwindigkeitsbestimmung kann ferner anhand einer Frequenzverschiebung, die durch den Doppler-Effekt hervorgerufen wird, durchgeführt werden. Das Vorliegen von zumindest einem der folgenden Merkmale, und zwar der auf das Werkzeug 16 weisenden Bewegungsrichtung 90, eines momentanen Werts der Geschwindigkeit und/oder der Beschleunigung oberhalb eines vorbestimmten Schwellenwerts 91 (siehe Figur 14), oder das Vorliegen einer beliebigen Kombination dieser Merkmale wird mittels der Datenbank 44 einer Anwendungssituation 92 zugeordnet. Diese ist wiederum einem als Sicherheitsmaßnahme 94 ausgeführten Vorgehen zugeordnet, in welchem die Aktorikeinheit 48 z.B. eine Sicherheitsabschaltung der Werkzeugmaschine 10, und zwar der Antriebseinheit 14, betätigt.

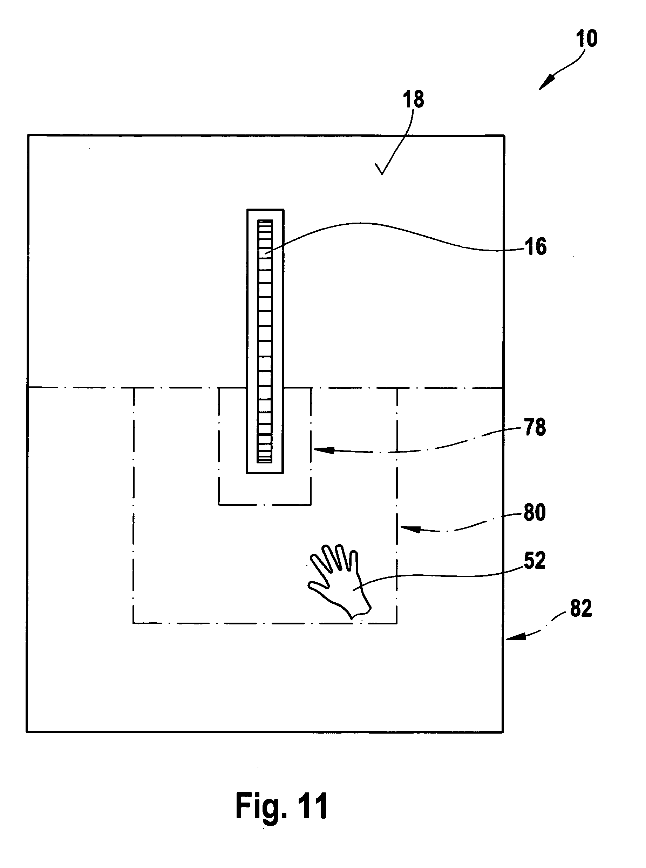

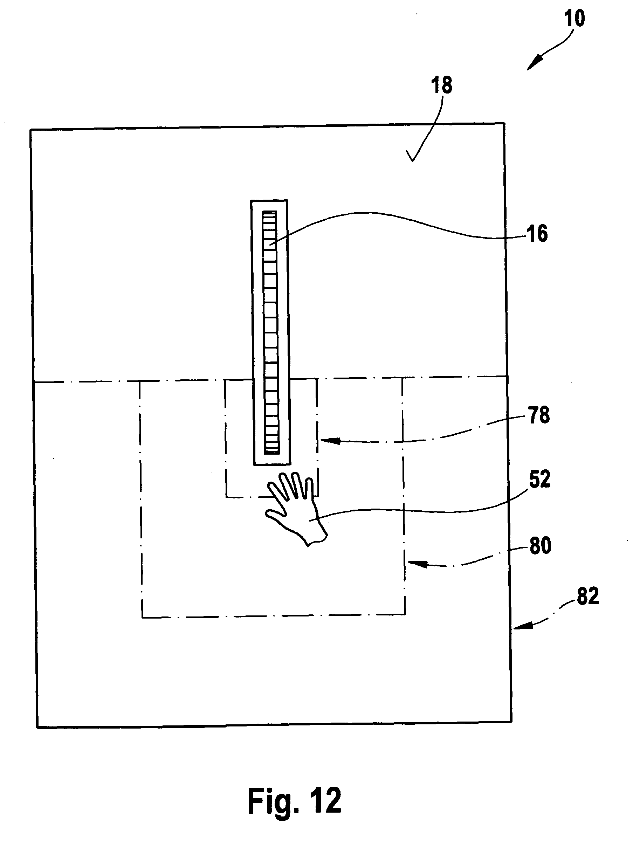

Den weiteren Überwachungsbereichen 78, 80 sind unterschiedliche Betriebsmodi der Werkzeugmaschine 10 zugeordnet. Insbesondere ist dem Überwachungsbereich 80 ein Warnmodus zugeordnet. Wird, wie in Figur 11 dargestellt, die Hand des Bedieners im Überwachungsbereich 80 erkannt, so wird in einem ersten Warnmodus von der Erkennungseinheit 26 eine Warnungsausgabe mittels einer Ausgabeeinheit 96 ausgelöst (siehe Figur 2). In diesem Warnmodus oder in einem weiteren Warnmodus erfolgt eine Warnung des Bedieners im Zusammenwirken mit der Antriebseinheit 14 mittels eines Verlangsamens des Werkzeugantriebs, d.h. durch das Vermindern der Drehzahl bei der Rotation des Werkzeugs 16. Dem werkzeugnahen Überwachungsbereich 78 ist ein Aktorikmodus der Werkzeugmaschine 10 zugeordnet. Wird, wie in Figur 12 dargestellt, das Vorhandensein der Hand im werkzeugnahen Überwachungsbereich 78 erkannt, so wird mittels der Aktorikeinheit 48 unmittelbar ein Beseitigen des angetriebenen Werkzeugs 16 aus dem Überwachungsbereich 78 durchgeführt, indem das Werkzeug 16 versenkt wird oder der Antrieb des Werkzeugs 16 gestoppt wird.

Die Ausgestaltung der Überwachungsbereiche 78, 80, 82 in den Figuren 10 bis 12 ist beispielhaft. Eine weitere Ausgestaltung kann der Figur 13 entnommen werden. Hierbei umschließt der werkzeugnahe Überwachungsbereich 78 das Werkzeug 16. Im seitlichen Bereich des Werkzeugs 16 setzt sich der Überwachungsbereich 78 aus Punkten zusammen, die einen maximalen kleinsten Abstand D1 zum Werkzeug 16 aufweisen, der insbesondere maximal 2 cm beträgt. Im Bereich, der in Werkstückschieberichtung 88 vor der Schneidkante des Werkzeugs 16 angeordnet ist, entspricht der maximale kleinste Abstand D2 insbesondere einem Abstand von maximal 5 cm. Der zweite Überwachungsbereich 80 umfasst den ersten Überwachungsbereich 78 im Wesentlichen.

Figur 14 zeigt die Datenbank 44. In dieser sind in einer Zuordnungstabelle 98 Kenngrößen, z.B. $A_3$, $B_2$ usw., jeweils einer Anwendungssituation A bzw. B usw. zugeordnet. Diese Kenngrößen entsprechen einem Signalmuster, d.h. einer Kenngröße oder einem Satz von charakteristischen Kenngrößen, wie z.B. einer Signalamplitude, der Position eines Amplitudenmaximums usw., die jeweils ein für eine Anwendungssituation typisches Empfangssignal 38 charakterisieren, oder sie können Kenngrößen sein, die, wie weiter oben beschrieben, die Bewegung eines überwachten Objekts relativ zum Werkzeug 16 charakterisieren. Beispielsweise entspricht die Kenngröße $B_2$ der Schwelle 69 für die Amplitude des Empfangssignals 38, welcher die Anwendungssituation 71 zugeordnet ist, und die Kenngröße $J_3$ entspricht dem Schwellenwert 91 der momentanen Geschwindigkeit eines im Überwachungsbereich 82 detektierten Körperteils, wobei diesem Schwellenwert 91 die Anwendungssituation 92 zugeordnet ist.

In einer alternativen Ausführung kann die Zuordnung einer erfassten Kenngröße zu einer Anwendungssituation von der Recheneinheit 40 mittels einer Methode der unscharfen Logik, wie z.B. mittels einer Methode der Fuzzy-Logik, durchgeführt werden. Liegt eine erfasste Kenngröße oder ein Satz von Kenngrößen vor, so wird hierbei diesen Kenngrößen eine Anwendungssituation mit einer Wahrscheinlichkeit zwischen Null und eins zugeordnet.

In der Datenbank 44 sind in einer weiteren Zuordnungstabelle 100 Anwendungssituationen A, B, C usw. Vorgehensweisen I, II, III usw. für die Werkstückbearbeitung zugeordnet. Wenn eine Anwendungssituation von der Recheneinheit 40 erkannt wird, kann auf diese Anwendungssituation reagiert werden, indem die Aktorikeinheit 48 dem Vorgehen entsprechend einen Verlauf der Werkstückbearbeitung ggf. modifiziert. Beispielsweise wird der Anwendungssituation 92 die Sicherheitsmaßnahme 94 zugeordnet, die einem Vorgehen II entspricht, nach welchem wie oben beschrieben ein Werkzeugantrieb gestoppt wird.

Zur Erweiterung der Datenbank 44 mit neuen Anwendungssituationen und neuen Vorgehensweisen für diese Anwendungssituationen ist ein Lernmodus der Werkzeugmaschine 10 vorgesehen. In diesem Modus können Anwendungssituationen von dem Bediener absichtlich geschaffen werden, wobei die Recheneinheit 40 selbständig lernen kann, solche Anwendungssituationen zu erkennen und zu ermitteln, welche Vorgehensweisen diesen Anwendungssituationen angepasst sind. Dabei lernt die Recheneinheit 40, diese Anwendungssituationen jeweils mit einem oder mehreren Signalmustern zu korrelieren. Hierzu arbeitet die Recheneinheit 40 in diesem Modus auf der Basis einer neuronalen Logik, die eine solche Selbstlernfunktion erlaubt. Dabei kann der Bediener ein Sicherheitsniveau jederzeit einstellen, bis ein gewünschtes Vorgehen für eine bestimmte Anwendungssituation erreicht ist. Dieses kann automatisch in der Datenbank 44 gespeichert werden.

**Patentansprüche**

1. Werkzeugmaschinenüberwachungsvorrichtung mit einer Erkennungseinheit (26) mit einem, Ultrabreitbandradarsensor (28, 70; 72, 74, 76), zur Erkennung einer Anwendungssituation (71, 92) bei einer Werkzeugmaschine (10), wobei die Erkennungseinheit (26) dazu vorgesehen ist, eine Anwendungssituation (71, 92) anhand der Detektion von menschlichem oder tierischem Gewebe zu erkennen, **dadurch gekennzeichnet, dass** die Erkennungseinheit (26) zur Erzeugung eines Ultrabreitbandradarsignals (32) mittels einer stufenweisen Frequenzmodulation vorgesehen ist und eine Datenbank (44) aufweist, in welcher einem Satz von Kenngrößen ($B_2$, $J_3$) einen Anwendungssituation (71, 92) zugeordnet ist und die Erkennungseinheit (26) dazu ausgebildet ist eine Unterscheidung zwischen menschlichem Gewebe einerseits und einem Werkstück aus Holz andererseits anhand einer zeitlichen und/oder spektralen Auswertung eines Empfangssignals (38) des Ultrabreitbandradarsensors (28, 70; 72, 74, 76) zu treffen, wobei das von dem Ultrabreitbandradarsignal (32) angeregte Empfangssignal (38) zur Auswertung einer Kreuzkorrelation mit dem Ultrabreitbandradarsignal (32) in dessen gesendete Form unterzogen wird.

2. Werkzeugmaschinenüberwachungsvorrichtung nach Anspruch 1, **dadurch gekennzeichnet, dass** die Erkennungseinheit (26) es ermöglicht, eine Unterscheidung von menschlichem oder tierischem Gewebe einerseits und Holz oder Metall oder Kunststoffen andererseits zu treffen.

3. Werkzeugmaschinenüberwachungsvorrichtung nach Anspruch 1 oder 2, **dadurch gekennzeichnet, dass** die Vorrichtung eine Positions- und/oder Geschwindigkeitsbestimmung ermöglicht.

4. Werkzeugmaschinenüberwachungsvorrichtung nach Anspruch 3, **dadurch gekennzeichnet, dass** die Position- und/oder Geschwindigkeitsbestimmung eine Positions- und/oder Geschwindigkeitsbestimmung von menschlichem oder tierischem Gewebe ist.

5. Werkzeugmaschinenüberwachungsvorrichtung nach einem der vorhergehenden Ansprüche, **gekennzeichnet durch** ein Antennenarray (84, 86).

6. Werkzeugmaschinenüberwachungsvorrichtung nach Anspruch 5, **dadurch gekennzeichnet, dass** das Antennenarray (84, 86) als phasenvariables Antennenarray ausgebildet ist.

7. Werkzeugmaschinenüberwachungsvorrichtung nach Anspruch 5 oder 6, **dadurch gekennzeichnet, dass** das Antennenarray (84, 86) zumindest eine Ultrabreitbandradarantenne (30) aufweist.

8. Werkzeugmaschinenüberwachungsvorrichtung nach einem der vorhergehenden Ansprüche, **dadurch gekennzeichnet, dass** die Erkennungseinheit (26) zumindest einen Sensor (28; 72, 74, 76) aufweist, der in einer Werkzeugmaschinengrundeinbaustellung unterhalb einer Werkzeugmaschinenarbeitsfläche (18) zum Platzieren eines Werkstücks (54) angeordnet ist.

9. Werkzeugmaschinenüberwachungsvorrichtung nach einem der vorhergehenden Ansprüche, **dadurch gekennzeichnet, dass** die Erkennungseinheit (26) dazu auslegt ist, ein durch eine Reflexion auf ein untersuchtes Objekt (52) erzeugtes Signal (38) auszuwerten.

10. Werkzeugmaschinenüberwachungsvorrichtung nach einem der vorhergehenden Ansprüche, **dadurch gekennzeichnet, dass** die Erkennungseinheit (26) zumindest zwei Überwachungsbereiche (78, 80, 82) zum Überwachen eines Anwendungsprozesses der Werkzeugmaschine (10) festlegt.

11. Werkzeugmaschinenüberwachungsvorrichtung nach Anspruch 10, **dadurch gekennzeichnet, dass** den Überwachungsbereichen (78, 80, 82) jeweils ein unterschiedlicher Betriebsmodus der Werkzeugmaschine (10) zugeordnet ist.

12. Werkzeugmaschinenüberwachungsvorrichtung nach Anspruch 10 oder 11, **dadurch gekennzeichnet, dass** zumindest einem der Überwachungsbereiche (80) ein Wammodus der Werkzeugmaschine (10) zugeordnet ist

**13.** Werkzeugmaschinenüberwachungsvorrichtung nach Anspruch 12, **dadurch gekennzeichnet, dass** die Erkennungseinheit (26) - im Zusammenwirken mit einer werkzeugmaschinenantriebseinheit (14) zum Antrelben eines Werkzeugs (16) - zum Verlangsamen eines Werkzeugantriebs im Warnmodus vorgesehen ist.

**14.** Werkzeugmaschinenüberwachungsvorrichtung nach einem der Ansprüche 10 bis 13. **dadurch gekennzeichnet, dass** zumindest einem der Überwachungsbereiche (78) ein Beseitigen eines angetriebenen Werkzeugs (16) aus einem Arbeitsbereich der Werkzeugmaschine (10) zugeordnet ist.

**15.** Werkzeugmaschinenüberwachungsvorrichtung nach einem der Ansprüche 10 bis 14, **dadurch gekennzeichnet, dass** zumindest einem der Überwachungsbereiche (78) eine Sicherheitsabschaltung der Werkzeugmaschine (10) zugeordnet ist.

**16.** Werkzeugmaschinenüberwachungsvorrichtung nach einem der vorhergehenden Ansprüche, **dadurch gekennzeichnet, dass** die Erkennungseinheit (26) eine Recheneinheit (40) umfasst, die dazu vorgesehen ist, die Anwendungssituation durch eine auf einer unscharfen und/oder neuronalen Logik basierende Auswertung von Kenngrößen zu erkennen.

**17.** Werkzeugmaschinenüberwachungsvorrichtung nach einem der vorhergehenden Ansprüche, **gekennzeichnet durch** eine Aktorikeinheit (48) zur Durchführung einer Sicherheitsmaßnahme, die mit der Erkennungseinheit (26) in Wirkverbindung steht.

**18.** Werkzeugmaschine mit einer Werkzeugmaschinenüberwachungsvorrichtung nach einem der vorhergehenden Ansprüche.

**19.** Verfahren zur Erkennung einer Anwendungssituation (71, 92) bei einem Anwendungsprözess einer Werkzeugmaschine (10), wobei eine Erkennungseinheit (26) zur Erkennung der Anwendungssituation (71, 92) ein Ultrabreitbandradarsignal (32) verwendet, **dadurch gekennzeichnet, dass** das Ultrabreitbandradarsignal (32) mittels einer stufenweisen Frequenzmodulation erzeugt wird und wenigstens eine Kenngröße aus der Detektion von menschlichem oder tierischem Gewebe erfasst wird, und eine Unterscheidung zwischen menschlichem Gewebe einerseits und einem Werkstück aus Holz andererseits anhand einer zeitlichen und/oder spektralen Auswertung eines Empfangssignals (38) eines Ultrabreitbandradarsensors 28, 70; 72; 74, 76) durch die Erkennungseinheit (26) erfolgt, wobei das von dem Ultrabreitbandradarsignal (32) angeregte Empfangssignal (38) zur Auswertung einer Kreuzkorrelation mit dem Ultrabreitbandradarsignal (32) in dessen gesendeter Form unterzogen wird.

**Claims**

**1.** Machine tool monitoring device having a detection unit (26) with an ultra-wideband radar sensor (28, 70; 72, 74, 76) for detecting a usage situation (71, 92) in a machine tool (10), the detection unit (26) being intended to detect a usage situation (71, 92) by detecting human or animal tissue, **characterized in that** the detection unit (26) is intended to generate an ultra-wideband radar signal (32) using stepwise frequency modulation and has a database (44) in which a usage situation (71, 92) is associated with a set of characteristic variables ($B_2$, $J_3$), and the detection unit (26) is designed to distinguish between human tissue, on the one hand, and a workpiece made of wood, on the other hand, by temporally and/or spectrally evaluating a reception signal (38) of the ultra-wideband radar sensor (28, 70; 72, 74, 76), the reception signal (38) excited by the ultra-wideband radar signal (32) being subjected, for the purpose of evaluation, to a cross-correlation with the ultra-wideband radar signal (32) in its transmitted form.

**2.** Machine tool monitoring device according to Claim 1, **characterized in that** the detection unit (26) makes it possible to distinguish between human or animal tissue, on the one hand, and wood or metal or plastics, on the other hand.

**3.** Machine tool monitoring device according to Claim 1 or 2, **characterized in that** the device makes it possible to determine a position and/or speed.

**4.** Machine tool monitoring device according to Claim 3, **characterized in that** the position and/or speed determination is a position and/or speed determination of human or animal tissue.

**5.** Machine tool monitoring device according to one of the preceding claims, **characterized by** an antenna array (84, 86).

6. Machine tool monitoring device according to Claim 5, **characterized in that** the antenna array (84, 86) is in the form of a variable-phase antenna array.

7. Machine tool monitoring device according to Claim 5 or 6, **characterized in that** the antenna array (84, 86) has at least one ultra-wideband radar antenna (30).

8. Machine tool monitoring device according to one of the preceding claims, **characterized in that** the detection unit (26) has at least one sensor (28; 72, 74, 76) which is arranged in a machine tool basic installed position below a machine tool working surface (18) for placing a workpiece (54).

9. Machine tool monitoring device according to one of the preceding claims, **characterized in that** the detection unit (26) is designed to evaluate a signal (38) generated by reflection onto an object (52) being examined.

10. Machine tool monitoring device according to one of the preceding claims, **characterized in that** the detection unit (26) defines at least two monitoring areas (78, 80, 82) for monitoring a usage process of the machine tool (10).

11. Machine tool monitoring device according to Claim 10, **characterized in that** each of the monitoring areas (78, 80, 82) is associated with a different operating mode of the machine tool (10).

12. Machine tool monitoring device according to Claim 10 or 11, **characterized in that** at least one of the monitoring areas (80) is associated with a warning mode of the machine tool (10).

13. Machine tool monitoring device according to Claim 12, **characterized in that** the detection unit (26) - in combination with a machine tool drive unit (14) for driving a tool (16) - is intended to slow down a tool drive in the warning mode.

14. Machine tool monitoring device according to one of Claims 10 to 13, **characterized in that** at least one of the monitoring areas (78) is associated with removing a driven tool (16) from a working area of the machine tool (10).

15. Machine tool monitoring device according to one of Claims 10 to 14, **characterized in that** at least one of the monitoring areas (78) is associated with a safety shutdown of the machine tool (10).

16. Machine tool monitoring device according to one of the preceding claims, **characterized in that** the detection unit (26) comprises a computation unit (40) which is intended to detect the usage situation by means of an evaluation of characteristic variables which is based on fuzzy logic and/or neural logic.

17. Machine tool monitoring device according to one of the preceding claims, **characterized by** an actuator unit (48) for carrying out a safety measure, which is operatively connected to the detection unit (26).

18. Machine tool having a machine tool monitoring device according to one of the preceding claims.

19. Method for detecting a usage situation (71, 92) in a usage process of a machine tool (10), a detection unit (26) using an ultra-wideband radar signal (32) to detect the usage situation (71, 92), **characterized in that** the ultra-wideband radar signal (32) is generated using stepwise frequency modulation and at least one characteristic variable is recorded from the detection of human or animal tissue, and the detection unit (26) distinguishes between human tissue, on the one hand, and a workpiece made of wood, on the other hand, by temporally and/or spectrally evaluating a reception signal (38) of an ultra-wideband radar sensor (28, 70; 72, 74, 76), the reception signal (38) excited by the ultra-wideband radar signal (32) being subjected, for the purpose of evaluation, to a cross-correlation with the ultra-wideband radar signal (32) in its transmitted form.

**Revendications**

1. Dispositif de surveillance de machine-outil, comprenant une unité d'identification (26) munie d'un détecteur radar à bande ultra-large (28, 70 ; 72, 74, 76) pour identifier une situation d'utilisation (71, 92) sur une machine-outil (10), l'unité d'identification (26) étant prévue pour identifier une situation d'identification (71, 92) au moyen de la détection de tissus humains ou animaux, **caractérisé en ce que** l'unité d'identification (26) est prévue pour générer un signal radar à bande ultra-large (32) au moyen d'une modulation de fréquence par paliers et présente une base de données (44) dans laquelle un jeu de grandeurs caractéristiques ($B_2$, $J_3$) est associé à une situation d'utilisation (71, 92) et l'unité d'identification (26) est configurée pour faire une distinction entre des tissus humains d'une part et une pièce en bois d'autre part à l'aide d'une interprétation temporelle et/ou spectrale d'un signal reçu (38) du détecteur radar à bande ultra-large (28, 70 ; 72, 74, 76), le signal reçu (38) excité par le signal radar à bande ultra-large (32) étant soumis, en vue de l'interprétation, à une corrélation croisée avec le signal radar à bande ultra-large (32) dans sa forme émise.

2. Dispositif de surveillance de machine-outil selon la revendication 1, **caractérisé en ce que** l'unité d'identification (26) permet de faire une distinction entre les tissus humains ou animaux d'une part et le bois ou le métal ou les matières plastiques d'autre part.

3. Dispositif de surveillance de machine-outil selon la revendication 1 ou 2, **caractérisé en ce que** le dispositif permet une détermination de la position et/ou de la vitesse.

4. Dispositif de surveillance de machine-outil selon la revendication 3, **caractérisé en ce que** la détermination de la position et/ou de la vitesse est une détermination de la position et/ou de la vitesse d'un tissu humain ou animal.

5. Dispositif de surveillance de machine-outil selon l'une des revendications précédentes, **caractérisé par** un réseau d'antennes (84, 86).

6. Dispositif de surveillance de machine-outil selon l'une des revendications précédentes, **caractérisé en ce que** le réseau d'antennes (84, 86) est réalisé sous la forme d'un réseau d'antennes à phase variable.

7. Dispositif de surveillance de machine-outil selon la revendication 5 ou 6, **caractérisé en ce que** le réseau d'antennes (84, 86) présente au moins une antenne radar à bande ultra-large (30).

8. Dispositif de surveillance de machine-outil selon l'une des revendications précédentes, **caractérisé en ce que** l'unité d'identification (26) présente au moins un détecteur (28 ; 72, 74, 76) qui est disposé dans une position d'installation de base de la machine-outil au-dessous d'une surface de travail de la machine-outil (18) destinée au placement d'une pièce (54).

9. Dispositif de surveillance de machine-outil selon l'une des revendications précédentes, **caractérisé en ce que** l'unité d'identification (26) est conçue pour interpréter un signal (38) généré par une réflexion sur un objet examiné (52).

10. Dispositif de surveillance de machine-outil selon l'une des revendications précédentes, **caractérisé en ce que** l'unité d'identification (26) définit au moins deux zones de surveillance (78, 80, 82) pour surveiller un processus d'utilisation de la machine-outil (10).

11. Dispositif de surveillance de machine-outil selon la revendication 10, **caractérisé en ce qu'**un mode de fonctionnement différent de la machine-outil (10) est à chaque fois associé aux zones de surveillance (78, 80, 82).

12. Dispositif de surveillance de machine-outil selon la revendication 10 ou 11, **caractérisé en ce qu'**un mode d'alerte de la machine-outil (10) est associé à au moins l'une des zones de surveillance (80).

13. Dispositif de surveillance de machine-outil selon la revendication 12, **caractérisé en ce que** l'unité d'identification (26), en interaction avec une unité d'entraînement de machine-outil (14) destinée à entraîner un outil (16), est prévue pour ralentir un entraînement d'outil dans le mode d'alerte.

14. Dispositif de surveillance de machine-outil selon l'une des revendications 10 à 13, **caractérisé en ce qu'**une mise à l'écart d'une pièce entraînée (16) hors d'une zone de travail de la machine-outil (10) est associée à au moins l'une des zones de surveillance (78).

15. Dispositif de surveillance de machine-outil selon l'une des revendications 10 à 14, **caractérisé en ce qu'**une mise hors service de sécurité de la machine-outil (10) est associée à au moins l'une des zones de surveillance (78).

16. Dispositif de surveillance de machine-outil selon l'une des revendications précédentes, **caractérisé en ce que** l'unité d'identification (26) comprend une unité de calcul (40) qui est conçue pour identifier la situation d'utilisation par une interprétation des grandeurs caractéristiques basée sur une logique floue et/ou neuronale.

**17.** Dispositif de surveillance de machine-outil selon l'une des revendications précédentes, **caractérisé par** une unité d'actionnement (48) destinée à effectuer une action de sécurité et qui est en liaison active avec l'unité d'identification (26).

**18.** Machine-outil équipée d'un dispositif de surveillance de machine-outil selon l'une des revendications précédentes.

**19.** Procédé d'identification d'une situation d'utilisation (71, 92) lors d'un processus d'utilisation d'une machine-outil (10), une unité d'identification (26) employant un signal radar à bande ultra-large. (32) pour identifier la situation d'utilisation (71, 92), **caractérisé en ce que** le signal radar à bande ultra-large (32) est généré au moyen d'une modulation de fréquence par paliers et au moins une grandeur caractéristique est captée de la détection de tissus humains ou animaux, et une distinction entre des tissus humains d'une part et une pièce en bois d'autre part est effectuée par l'unité d'identification (26) à l'aide d'une interprétation temporelle et/ou spectrale d'un signal reçu (38) d'un détecteur radar à bande ultra-large (28, 70 ; 72, 74, 76), le signal reçu (38) excité par le signal radar à bande ultra-large (32) étant soumis, en vue de l'interprétation, à une corrélation croisée avec le signal radar à bande ultra-large (32) dans sa forme émise.

Fig. 1

**Fig. 2**

Fig. 3

**Fig. 5**

**Fig. 6**

**Fig. 7a**

**Fig. 7b**

**Fig. 7c**

**26**
**70** → **30**
**32** **38**
**18**

**Fig. 8a**

**26**
**70** → **30**
**32**
**54**
**18**

**Fig. 8b**

**26**
**70** → **30**
**32** **38**
**52**
**54**
**18**

**Fig. 8c**

**Fig. 9a**

**Fig. 9b**

**Fig. 9c**

**Fig. 10**

Fig. 11

**Fig. 12**

**Fig. 13**

78

16

80

D1

D2

10

18

98    69    44

A    $A_1$    $A_2$    $A_3$    $A_4$

71 — B    $B_1$    $B_2$    $B_3$

C    ...

91
92 — J    ...    $J_3$

A    B    C    ...    I

71 — 
92 — J    K    L    ...    II
94 — 
P    Q    R    ...    III

100 — 

**Fig. 14**

**IN DER BESCHREIBUNG AUFGEFÜHRTE DOKUMENTE**

**In der Beschreibung aufgeführte Patentdokumente**

• EP 1422022 A1

**In der Beschreibung aufgeführte Nicht-Patentliteratur**

• Object discrimination and characterization applications operating in the frequency band 2,2 GHz to 8 GHz. ETSI Standards. European Telecommunications Standards Institute, Mai 2006